# EUROPEAN PATENT SPECIFICATION

(11) **EP 3 897 195 B1**
(45) Date of publication and mention of the grant of the patent: **26.10.2022**
(21) Application number: 19809850.1
(22) Date of filing: 02.12.2019
(51) Int. Cl.: A23L 5/10, A23P 20/10, A21D 13/31, A21D 13/30, A21D 13/34, A23L 3/36

(54) **MICROWAVEABLE FROZEN BREADED FOOD PRODUCT**
MIKROWELLENTAUGLICHES GEFRORENES PANIERTES PRODUKT
PRODUIT PANÉ CONGELÉ UTILISABLE AU FOUR À MICRO-ONDES

(30) Priority: 21.12.2018 EP 18215630; 02.08.2019 EP 19189901
(43) Date of publication of application: 27.10.2021
(73) Proprietor: Crisp Sensation Technology B.V., 5301 LW Zaltbommel (NL)
(72) Inventor: HELMINK, Tom, 5301 LW Zaltbommel (NL); KALSBEEK, Jasper Steven, 5301 LW Zaltbommel (NL); VAN DONKELAAR, Laura Henrietta Gerardina, 5301 LW Zaltbommel (NL)
(74) Representative: Nederlandsch Octrooibureau
(86) International application number: PCT/EP2019/083288
(87) International publication number: WO 2020/126436

(56) References cited:
- EP-A1- 2 481 294
- WO-A1-92/01384
- WO-A1-2012/175930
- WO-A1-2017/118746
- US-A1- 2004 156 954
- US-A1- 2017 064 981
- US-A1- 2017 064 982
- US-A1- 2017 196 254
- US-A1- 2017 196 255
- US-B1- 6 503 546
- GENNADIOS A ET AL: "APPLICATION OF EDIBLE COATINGS ON MEATS, POULTRY AND SEAFOODS: A REVIEW", LWT- FOOD SCIENCE AND TECHNOLOGY, ACADEMIC PRESS, UNITED KINGDOM, vol. 30, no. 4, 1 January 1997 (1997-01-01), pages 337-350, XP001156798, ISSN: 0023-6438, DOI: 10.1006/FSTL.1996.0202

## Description

### TECHNICAL FIELD OF THE INVENTION

The invention relates to a process which is defined by the claims. The present disclosure basically relates to a process of manufacturing a microwaveable frozen breaded food product that comprises a water-containing filling, said method comprising:
a) providing a water-containing filling composition;
b) providing a plastically deformable farinaceous dough;
c) enveloping a portion of the filling composition with a layer of the farinaceous dough to produce an enveloped filling;
d) pre-coating the surface of the enveloped filling with an adhesion composition to produce a pre-coated product;
e) applying a crumb onto the surface of the prc-coated product to produce a breaded product;
f) frying the breaded product to produce a fried product; and
g) freezing the fried product.

The microwaveable frozen breaded food products obtained by the process of the present invention can be stored in a freezer for up to half a year and be heated in a microwave to produce a ready-to-eat product having a crispy outer coating.

### BACKGROUND OF THE INVENTION

Fried battered and breaded (crumb-coated) food products with a filling of fish, seafood, poultry, red meat, vegetables, ragout, etc. are popular for their crisp texture and golden brown appearance. Such coated food products generally comprise a food substrate to which a variety of combinations of coating materials is applied. The coating materials include tempura or cohesion batters, adhesion batters, predust, and breading crumbs.

The crisp texture of fried batter and breaded food products rapidly disappears after the fried product has been prepared, especially if the substrate (filling) has a high water content. This loss of crispiness is caused by the uptake of water by the crunchy crumb layer. After frying, water migrates from the filling towards the crumb layer and is absorbed by the dry hard crumb particles. Water uptake by these crumb particles transforms these hard rigid particles into elastic, deformable particles. The effect of this transition is very noticeable to consumers.

To provide frozen breaded food products comprising a water-containing filling that can be reheated in a microwave to produce a ready-to-eat product having a crispy outer coating, even after the product has been stored in a freezer for up to a half year, represents a formidable challenge, as freezing temperatures do not prevent water migration. As a matter of fact, significant water uptake by the crumb layer occurs during frozen storage of frozen breaded food products and this water uptake adversely affects the eating quality, notably the crispiness, of the microwave heated product.

Use of microwave radiation for heating frozen breaded food product containing a wet filling in itself is also problematic. Microwave radiation preferentially heats up the water in the filling and drives migration of water towards the dry crumb coating, especially if the water is transformed into steam. As explained above, uptake of this water by the crumb layer destroys the crispiness of the crumb layer. This problem is not observed when frozen breaded food products are prepared in a fryer as in that case the product is heated from the outside inwards and moisture is rapidly evaporated from the outer coating by the direct contact with hot oil.

WO 2012/101025 describes a method of producing a frozen, microwaveable, coated food product, said method comprising the steps of:
- providing a portion of a solid or solidified substrate;
- coating the portion with an aqueous pre-coating liquid to form a pre-coated portion;
- applying a coating of bonding crumb to the pre-coated portion to form a crumb coated portion;
- applying a batter to the crumb coated portion to form a batter coated portion;
- applying a coating of coating crumb to the batter coated portion to form a breaded portion;
- frying the breaded portion; and
- freezing the fried coated portion.

WO 2012/175930 describes a method of coating a microwave cookable or reheatable foodstuff comprising the steps of:
- pre-coating an edible solid substrate with an aqueous pre-coating composition;
- application of fine crumb layer;
- applying a coating composition comprising 55 to 80 wt% water and 20 to 45 wt% by dry weight of an ingredient mixture including:
   35 to 60 wt% of a flour component comprising one or more flours selected from soy flour, maize flour, rice flour and wheat flour;
   15 to 35 wt% of non-modified starch;
   0.1 to 5 wt% of a gelling agent;
   0 to 15 wt% of modified starch; and
   0 to 35 wt% of other edible ingredients;
- followed by the application of another crumb layer.

WO 2017/118746 describes a method of manufacture of a microwave or thermally reheatable or cookable food product comprising the steps of:
- providing a solid or solidified substrate;
- applying a first aqueous coating to the substrate;
- applying an inner coating layer comprising ethylcellulose, a particulate farinaceous component and, optionally, one or more further edible ingredients to form an ethylcellulose coated core;
- applying a second aqueous coating to the ethylcellulose coated core;
- applying a coating particulate farinaceous component to form a breaded product;
- frying the breaded product; and
- freezing the fried product.

US 2004/0156954 describes a microwaveable frozen dough product containing a filling, said product comprising:
- pre-cooked dough comprising flour, water, and corn meal dispersed within said dough; and
- filling comprising crispness maintenance agent, wherein said crispness maintenance agent comprises bread crumbs having an average particle size of from about 1 mm to about 7 mm.

US 6,503,546 describes a filled pastry product comprising:
- a raw, unbaked pastry dough comprising: 40-60% of flour; from 20-40% of a first fat; and 10-25% of water;
- a filling with a water content of 80-85% to provide a rate of heating slow enough to inhibit or avoid boiling of the filling; and
- a moisture barrier comprising from 80-98% of a second fat, a film-forming protein, and a hydrocolloid,
wherein the product is to be baked entirely in a microwave and the moisture barrier is disposed between the filling and the pastry dough and the moisture barrier substantially prevents moisture from the filling from contacting the pastry during microwave cooking, thereby allowing the pastry to become crisp during microwave baking.

Hot Pockets^{®} is an American brand of microwaveable turnovers and pocket sandwiches generally containing one or more types of cheese, meat, or vegetables. Hot Pockets ^{®} were developed by Paul Merage and his brother David, through their company Chef America Inc. Chef America invented a packaging sleeve and dough formula to keep its calzone-like sandwiches crispy when cooked in a microwave. Other relevant patent documents concerning microwaveable products are: US 2017/64981, US 2017/64982, EP 2481294, US 2017/196255, US 2017/196254, US 6503546, WO 2017/118746 and WO 92/1384.

### SUMMARY OF THE INVENTION

The inventors have developed a process that enables the manufacture of frozen breaded food products comprising a water-containing filling that can be reheated in a microwave to produce a ready-to-eat product having a crispy outer coating, even after the product has been stored in a freezer for up to half a year. The process comprises:
a) providing a filling composition with a water content of at least 40 wt.%;
b) providing a plastically deformable farinaceous dough comprising 40 to 70 wt.% flour, 10 to 40 wt.% fat and 12 to 40 wt.% water;
c) enveloping a portion of the filling composition with a layer of the farinaceous dough to produce an enveloped filling, the portion having a weight of 5 to 90 grams and the layer of dough having an average thickness of 0.5 to 2 mm;
d) pre-coating the surface of the enveloped filling with an adhesion composition to produce a pre-coated product;
e) applying a crumb onto the surface of the pre-coated product to produce a breaded product;
f) frying the breaded product to produce a fried product; and
g) freezing the fried product to a core temperature of less than -12 °C.

By enveloping small portions of filling with a thin layer of dough having a fat content of about 10 to about40 wt.%, followed by pre-coating, breading and frying, a fried product is obtained with a crispy outer coating that includes the baked dough layer. This fried product can be stored in frozen form for up to half a year, during which time the baked dough layer effectively prevents moisture migration from the filling to the outer crumb layer. Thus, the frozen product can be heated in a microwave oven to produce a ready-to-eat product with a crispy outer coating, even if the product has been stored for in a freezer for up to half a year. In this respect, the microwaveable frozen breaded food products of the present invention are superior to similar microwaveable frozen product that have been prepared using a batter instead of dough.

Although the inventors do not wish to be bound by theory, it is believed that the use of a thin dough layer with a high fat content in combination with small portions of filling is responsible for the exceptional frozen storage stability of the fried breaded food products of the present invention. In comparison to a batter, the dough layer more effectively prevents water uptake of the crumb layer during frozen storage and microwave heating. Furthermore, because the dough layer is thin, it does not have a noticeable effect on the crispiness of the crumb layer.

### DETAILED DESCRIPTION OF THE INVENTION

Accordingly, the invention relates to a process of manufacturing a microwaveable frozen breaded food product, said method comprising:
a) providing a filling composition with a water content of at least 40 wt%.;
b) providing a plastically deformable farinaceous dough comprising 40 to 70 wt.% flour, 10 to 40 wt.% fat and 12 to 40 wt.% water;
c) enveloping a portion of the filling composition with a layer of the farinaceous dough to produce an enveloped filling, the portion having a weight of 5 to 90 grams and the layer of dough having an average thickness of 0.5 to 2 mm;
d) pre-coating the surface of the enveloped filling with an adhesion composition to produce a pre-coated product;
e) applying a crumb onto the surface of the pre-coated product to produce a breaded product;
f) frying the breaded product to produce a fried product; and
g) freezing the fried product to a core temperature of less than -12 °C,

The term "farinaceous dough" as used herein refers to a mixture that largely consists of flour and water, and that is stiff enough to knead or roll. In this respect a farinaceous dough is different from a batter, which is a pourable mixture that also largely consists of flour and water, but generally has a higher water content than dough.

The term "dough" as used herein also encompasses laminated doughs containing one or more fat layers. Thus, a layer of laminated dough may be used to produce the enveloped filling. The term "fat" as used herein refers to lipids selected from triglycerides, diglycerides, monoglycerides, free fatty acids and phospholipids.

The fat content of the dough includes the fat that is contained in any thin fat layers of laminated dough.

Whenever reference is made herein to the particle size distribution of a particulate material, the particle size (or diameter) distribution is determined using a set of sieves having different mesh sizes.

The process of the present invention may comprise additional process steps besides above mentioned process steps a) to g). The process may, for instance, comprise application of one or more additional layers besides the layers of dough, adhesion composition and crumb.

The fat content of the dough may affect the crispiness of the microwave heated food product after long term storage. Preferably, the dough comprises 15 to 35 wt.% fat, more preferably about 20 to about 30 wt.% fat and most preferably about 22 to about 28 wt.% fat. Particularly good results can be achieved in terms of freezer stability if the fat contained in the dough has a melting point of at least 40°C, more preferably of about 42 to about 70°C and most preferably of about 45 to about 55°C. Examples of fats that can be employed in the preparation of the dough include high melting fats selected from hydrogenated vegetable oils, palm stearin and mixtures thereof, and blends of these high melting fats with vegetable oils such as sunflower oil, soybean oil, rapeseed oil, cottonseed oil, safflower oil, olive oil and mixtures thereof. The melting point of fats is determined by means of ISO method 6321:2002.

Triglycerides and diglycerides preferably constitute at least about 90 wt.% of the fat that is contained in the dough. Triglycerides preferably constitute at least about 80 wt.%, more preferably at least about 85 wt.% of the fat.

The water content of the dough preferably is in the range of about 15 to about 30 wt.%, more preferably in the range of about 16 to about 27 wt.% and most preferably of about 17 to about 24 wt.%.

The dough preferably contains about 35 to about 65 wt.% flour, more preferably about 40 to about 60 wt.% flour and most preferably about 48 to about 52 wt.% flour. Examples of flour that can be used in the preparation of the dough include wheat flour, rye flour, rice flour, barley flour, maize flour, oat flour and combinations thereof. Preferably, at least about 65 wt.%, more preferably at least about 75 wt.% and most preferably at least about 85 wt.% of the flour is wheat flour.

The dough employed in the present process can be a laminated or a non-laminated dough. Preferably, the dough is a non-laminated dough.

The flour component of the dough preferably contains a considerable amount of gluten. During preparation of the dough, gluten swells to form a continuous network of fine strands. This network of hydrophobic protein is believed to impair migration of water. Preferably, the dough contains at least about 8% gluten by weight of flour (including gluten). More preferably, the dough contains about 9 to about 14%, most preferably about 11 to about 14% gluten by weight of flour.

The crispiness of the microwave heated product after prolonged storage in a freezer is affected by the thickness of the dough layer. Preferably, the layer of dough has an average thickness of about 0.6 to about 1.8 mm, more preferably a thickness of about 0.75 to about 1.5 mm and most preferably a thickness of about 0.8 to about 1.2 mm.

The dough layer preferably has a minimum thickness of 0.2 mm, more preferably of 0.4 mm and most preferably of 0.5 mm.

The maximum thickness of the dough layer preferably is 5 mm, more preferably 4 mm and most preferably 3 mm.

The dough layer may contain thicker regions, for example where two dough layers are arranged in overlapping or overlying configuration. Any thicker regions preferably only extend over a minor proportion of the surface of the filling composition. Preferably, less than about 20%, more preferably less than about 10%, most preferably less than about 5% of the surface of the substrate is covered by dough layer having a thickness of more than 2 mm. The size of the portion of filling composition also affects the crispiness of the microwave heated product after prolonged frozen storage. Preferably, the portion of filling composition has a weight of about 7 to about 80 grams, more preferably of about 8 to about 60 grams and most preferably of about 10 to about 40 grams.

According to a particularly preferred embodiment, the average thickness of the dough layer in mm (Dt) is commensurate with the weight of the portion of filling composition (Fₘ) in grams, as expressed by the following equation:
0.01 ≤ (Dₜ)³ / Fₘ ≤ 0.2, more preferably 0.03 ≤ (Dₜ)³ / Fₘ ≤ 0.1

Preferably, the filling composition has a water activity of at least about 0.4. The benefits of the present invention are particularly appreciated if the filling composition has a high moisture content. Accordingly, in a preferred embodiment, the filling composition has a water activity of at least about 0.7, more preferably a water activity of about 0.8 to about 1 and most preferably a water activity of about 0.9 to about 1.

The filling composition typically has a water content in the range of 50 to 90 wt.%, most preferably in the range of about 60 to about 80 wt.%.

Preferably, the filling composition contains at least about 50 wt.%, more preferably at least about 60 wt.% and most preferably at least about 80 wt.% of edible ingredients selected from fish, meat, poultry, shellfish, shrimps, cheese, ragout, vegetables, fungi and combinations thereof.

The filling composition, especially if it is composed of chopped or comminuted pieces, is preferably impregnated with a stabiliser composition, for example by soaking, permeation or injection (for example vacuum pulse injection), prior to the forming into portions. Examples of suitable stabiliser compositions can be found in WO 97/03572.

The adverse impact of water in the filling composition on freezer stability of the microwaveable product can be reduced by incorporating a substantial amount of water-binding polysaccharide or protein. Accordingly, the filling composition preferably contains at least about 3% by weight of water, more preferably at least about 5% by weight of water and most preferably at least about 7% by weight of water of gelatin and /or polysaccharide selected from starch, modified starch, carboxymethylcellulose, methylcellulose, hydroxymethylcellulose, hydroxypropylmethyl cellulose, microcrystalline cellulose, pectin, alginate, gum Arabic, gellan, carrageenan, galactomannan, xanthan gum and combinations thereof.

According to a particularly preferred embodiment, the filling composition contains at least about 3% by weight of water, more preferably about 4 to about 10% by weight of water and most preferably about 5 to about 8% by weight of water of starch, modified starch or a combination thereof.

The freezer stability of the microwaveable product can be improved by including glycerol in the filling composition. Advantageously, the filling composition contains glycerol and water in a weight ratio that lies in the range of 1:9 to 2:1. More preferably, the filling composition contains glycerol and water in a weight ratio that lies in the range of about 1:8 to about 1:1, most preferably in the range of about 1:7 to about1:2.

It can be advantageous to cook the filling composition before it is enveloped with the dough layer. This avoids the need for the product to be fried for a prolonged period or for the frozen portion to be cooked thoroughly from the frozen state.

In the present process, the portions of the filling composition can be enveloped with the layer of dough in different ways.

In accordance with one embodiment, the portion of the filing composition is enveloped with the layer of the farinaceous dough by:
- sheeting the farinaceous dough into a lower dough sheet and an upper dough sheet;
- depositing portions of filling material in a regular pattern onto the lower dough sheet;
- placing the upper dough sheet upon the deposited portions of filling material and the lower dough sheet;
- applying pressure to the dough sheets in predetermined areas to seal the portions of filling material between fused dough sheets in a perimeter around the portions of filling material;
- cutting the fused dough sheets in a predetermined pattern to produce the enveloped fillings.

In accordance with an alternative embodiment, the portion of the filing composition is enveloped with the layer of the farinaceous dough by:
- sheeting the farinaceous dough into a dough sheet;
- depositing a portion of filling material onto the dough sheet;
- folding the dough sheet around the portion of filling material;
- applying pressure to overlapping areas of dough sheet to seal the portion of filling material inside an envelope of dough.

In accordance with a further alternative embodiment, the portion of the filing composition is enveloped with the layer of the farinaceous dough by:
- sheeting the farinaceous dough into a dough sheet;
- transporting the dough sheet at a predetermined horizontal velocity;
- depositing a line of portions of filling material at regular intervals onto the dough sheet;
- lifting the sides of the dough sheet around the portions of filling material and crimping the overlapping sides together above the portions of filling material;
- crimping together the dough sheet between the portions of filling material to seal the portions of filling material inside an envelope of dough;
- cutting through the crimped dough area between the sealed portions of filling material to release the enveloped fillings.

In accordance with yet another alternative embodiment, the filing composition is enveloped with the layer of the farinaceous dough by:
- supplying the farinaceous dough to an extruder;
- supplying the filling material to the extruder;
- continuously coextruding the dough and filling material as a longitudinal rope in which discrete portions of the filling material are positioned within and surrounded by the dough;
- crimping together the surrounding dough between the portions of filling material to seal the portions of filling material inside an envelope of dough;
- cutting through the crimped dough area between the sealed portions of filling material to release the enveloped fillings.

In the present process the enveloped filling is pre-coated with the adhesion composition so as to ensure that the crumb that is applied in the next step will stick to the dough that surrounds the filling. This may be achieved by employing an adhesion composition in the form of an adhesive aqueous liquid.

According to a particularly preferred embodiment, the adhesion composition is an aqueous fluid comprising about 0.3 to about 10 wt.%, more preferably about 0.4 to about 5 wt.% and most preferably about 0.5 to about 3 wt.% of hydrocolloid selected from polysaccharide, protein and combinations thereof. Examples of hydrocolloids that may suitably be applied in the adhesion composition include modified starch, modified cellulose, xanthan gum, egg albumin and combinations thereof.

The adhesion composition preferably contains about 1 to about 15 wt.%, more preferably about 2 to about 12 wt.% and most preferably about 3 to about 10 wt.% fat.

The adhesion composition that is applied onto the enveloped filling typically contains at least about 80 wt.%, more preferably about 88 to about 96 wt.% of water. In order to minimize drip-off and to maximize adhesion of the crumb, the adhesion composition preferably has a minimum viscosity of 300 cP, measured using a Brookfield viscometer with a number 3 spindle at 60 rpm at 20°C. Even more preferably, said viscosity lies within the range of about 400 to about 2000 cP, most preferably in the range of about 500 to about 1500.

The enveloped filling may suitably be pre-coated with the adhesion composition by spraying or brushing the adhesion composition onto the enveloped filling. Pre-coating may also be achieved by passing the enveloped filling through a bath filled with the adhesion composition or through a falling curtain of the adhesion composition.

The crumb that is applied to the pre-coated product preferably has a moisture content of less than about 10 wt.%, more preferably of less than about 8 wt.%, even more preferably of less than about 6 wt.% and most preferably of less than about 4 wt.%.

According to another preferred embodiment, the crumb comprises at least about 80 wt.% particles of cooked dough having a diameter in the range of about 0.5 to about 3 mm, more preferably having a diameter in the range of about 1 to about 2.8 mm, and most preferably about 1.2 to about 2.7 mm.

The crumb employed in accordance with the present invention preferably contains at least about 50 wt.% starch. More preferably, the crumb has a starch content of about 55 to about 85 wt.%, most preferably of about 65 to about 75 wt.%.

Gluten content of the crumb preferably is in the range of about 5 to about 20 wt.%, more preferably in the range of about 5 to about 12 wt.% and most preferably in the range of about 7 to about 11 wt.%.

In accordance with a particularly preferred embodiment, the crumb that is used in the present process is obtained by extruding a mixture of flour, water and optionally further ingredients, followed by milling of the extrudate. Preferably, this mixture contains at least about 0.1%, more preferably about 0.2 to about 6% and most preferably about 0.25 to about 4% by weight of flour of hydrolloid selected from natural gums, modified gums, gelatin, pectin, alginate, arabinogalactan, agar, carrageenan, furcellaran, xanthan, modified starch and combinations thereof. Preferably, the hydrocolloid is selected from natural gums and combinations thereof. Examples of natural gums that may suitably be employed as a hydrocolloid include guar gum, xanthan gum, locust bean gum, gum Arabic, tragacanth, gum karaya, gum ghatti, xanthan gum and combinations thereof. Most preferably, the hydrocolloid is selected from guar gum, locust bean gum, xanthan gum and combinations thereof.

The crumb employed in the present method may suitably be produced by the process described in WO 2010/001101

The present method may suitably employ a crumb coating apparatus that comprises a first conveyor and a second endless conveyor located below an end of the first conveyor, and beneath a flow of crumb particles so that portions fall from the first conveyor onto a layer of particles on the second conveyor. The second conveyor may pass through a curtain of crumb falling onto the conveyor surface so that the portion falls onto the crumb causing the crumb to adhere to the surface layer of the adhesion composition, and is then coated by the falling curtain of crumb particles. The apparatus may comprise a dispenser having an outlet extending across of the conveyor to provide the curtain of crumb extending across the path of the portions on the conveyor. A roller may be located above the conveyor on the exit side to bear on the coated portion to improve adhesion of the fine crumb.

The present process may comprise the application of multiple layers of crumb. For instance, following the pre-coating with the adhesion composition a layer of fine crumb may be applied followed by another coating of adhesion composition and application of a coarse crumb. Together these crumb layers will from a crunchy crumb layer after frying.

In the preparation of the breaded product about 100 parts by weight of filling composition are preferably combined with about 20 to about 200 parts by weight of dough, about 5 to about 45 parts by weight of adhesion composition and about 5 to about 80 parts by weight of crumb. More preferably, about 100 parts by weight of filling composition are combined with about 75 to about 135 parts by weight of dough, about 20 to about 40 parts by weight of adhesion composition and about 30 to about 60 parts by weight of crumb.

It may be advantageous to apply a coating layer onto the portions of filling composition before they are enveloped with the dough. Such a coating layer can act as an additional moisture barrier that impairs migration of water from the filling composition to the dough layer.

The frying of the breaded product in the present process preferably is done using oil having a temperature of 150-280°C, more preferably of 160-220°C and most preferably of 170-210°C.

Preferably, the frying of the breaded product is achieved by contacting the breaded product with the hot oil for 0.5-4 minutes, more preferably 1-3 minutes and most preferably 1.5-2.5 minutes.

Preferably, the fried product reaches a core temperature of at least about 70°C, more preferably of at least about 72°C and most preferably of about 75 to about 95°C at the end of the frying step.

The breaded product is suitably fried by immersing it in hot oil, for example by passing it through a bath of hot oil by means of a conveyor belt. The frying apparatus preferably comprises a double layer of parallel endless belts both layers passing beneath the oil surface, a product carried on the lower layer being prevented from floating during frying by contact with the upper layer. The belt may comprise wire screens or other perforated configurations.

According to a particularly preferred embodiment, within about 10 minutes, more preferably within about 5 minutes and most preferably within about 2 minutes after the fried product has been separated from the hot frying oil, the fried product is introduced into a freezer.

In a particular preferred embodiment of the present process, the fried product has a core temperature of at least about 60°C, more preferably of at least about 70°C and most preferably of at least about 72°C when it is introduced into a freezer.

In order to minimize unwanted water migration and coalescence, the fried product should be frozen as quickly as possible. Consequently, in a very preferred embodiment, the fried product is frozen by means of cryogenic freezing. Cryogenic freezing of the fried product preferably comprises the use of liquid nitrogen or liquid carbon dioxide, most preferably of liquid nitrogen.

Preferably, the fried product is contacted with liquid nitrogen until the core temperature of the product is less than -15 °C, more preferably less than -20°C and most preferably less than - 22°C.

The fried product is preferably packaged before or after the freezing. Most preferably, the fried product is packaged after the freezing.

The frozen product preferably is regularly shaped in that the volume of the product equals at least 50% of the volume of the smallest enclosing sphere or ellipsoid that fully encompasses the product.

Packaging of the frozen product is preferably done under an atmosphere having a very low moisture content so as avoid condensation of water onto the product. Accordingly it is preferred to package the frozen product under air having a relative humidity of less than 10%, or under a gas selected from nitrogen, carbon monoxide, carbon dioxide, argon and combinations thereof. More preferably, the gas is selected from nitrogen, carbon dioxide and combinations thereof. Most preferably, the gas is nitrogen.

In accordance with a particularly preferred embodiment, the frozen food product of the present invention is packaged in a packaging material that carries instructions to heat the food product in a microwave oven or an oven using a combination of microwave and conventional heating or a combination of microwave and radio frequency (RF) heating.

The invention is further illustrated by the following non-limiting examples.

### EXAMPLES

Frozen breaded food products were prepared using the procedure described below.

### Dough preparation

The dough recipe is shown in Table 1.

**Table 1**

| | **Wt.%** |
|---|---|
| Wheat flour | 50.8 |
| Salt | 1.0 |
| Fat powder ¹ | 25.4 |
| Water | 22.8 |

| | |
|---|---|
| ¹ Palm stearin (melting point appr. 53°C) | |

The dough is prepared as follows:
- Weigh all ingredients. Introduce all dry ingredients into a KitchenAid, add water and mix with dough hook on speed 1 for 2 minutes, until all ingredients are mixed well. Put the speed to 2 and mix for 3 more minutes.
- Divide into pieces of 200 grams.
- Knead with pasta roller (KitchenAid, 5KSMPRA pasta roller) on setting 1, fold and knead again on setting 1, fold the dough
- Package in a closed bag and keep in the fridge overnight.
- Roll the dough in the pasta machine, narrowing the gap by 1 setting with every pass (start at 1). At setting 3, cut the strip dough in 2 and roll each piece individually, until setting 6 (sheet thickness 1.15mm).

### Preparation of filling composition

The recipe of the dry mix that is used in the preparation of the filling composition is shown in Table 2.

**Table 2**

| | **Wt.%** |
|---|---|
| Sugar extra fine | 5.73 |
| Salt | 5.73 |
| Potato starch | 22.96 |
| Methocel MX | 1.14 |
| Carboxymethyl cellulose | 0.57 |
| Tomato powder | 60.21 |
| Sunflower oil | 0.52 |
| Pepper black ground | 0.87 |
| Onion powder | 1.71 |
| Chillies ground | 0.57 |

The filling composition is prepared by mixing all dry ingredients, followed by the addition of water (23 parts by weight of dry mix and 77 parts by weight of water).

### Enveloping portions of filling composition with dough

A first dough sheet is placed on a tray and portions of the filling composition are deposited onto the dough sheet. Some water is sprayed onto the dough to make it stick to the second dough sheet which is placed on top of the first sheet. The dough sheets are pressed together around the fillings and the ravioli-shaped dough-enveloped fillings are removed by cutting.

### Breading

The dough-enveloped fillings are pre-coated with an adhesion composition. The recipe of the adhesion composition is shown in Table 3.

**Table 3**

| | **Wt.%** |
|---|---|
| Egg albumin powder | 0.15 |
| Modified starch (Thermflo) | 0.35 |
| Methyl cellulose (Methocel a4m) | 0.25 |
| Xanthan gum | 0.25 |
| Sunflower oil | 5.0 |
| Water | 94.0 |

The adhesion composition is prepared by first mixing the dry ingredients, followed by the addition of the oil and subsequently the water. Mixing is continued until the dry ingredients are fully hydrated (~10-20 minutes)

The dough enveloped fillings are fully immersed in the adhesion composition for a few seconds. Next, the pre-coated products are removed and drained until a thin coating layer remains.

Coarse crumb (particle size 1.5-2.5 mm) that has been prepared using the process described in WO 2010/001101, is applied onto the pre-coated products by placing these products on a thick layer of the coarse crumb and covering the top with the same coarse crumb, and applying light pressure. Subsequently, the products are turned around and again placed on the crumb layer with the non-breaded side pointing downwards. Again, the top is covered with crumb, followed by the application of light pressure and removal of the fully breaded products.

### Frying and freezing

The breaded products are fried in oil of 180°C and are placed in the nitrogen freezer within 2 minutes after frying.

The nitrogen freezer is set at -90°C and freezing time in the freezer is 12 minutes. Core temperature of the frozen products upon removal from the freezer is less than -24°C.

### Packing and storage:

After freezing, the samples are immediately packed in water impermeable packaging material. Samples are stored at -24°C

### Microwave heating

The frozen breaded food products are prepared for consumption in a microwave by introducing the product in a frozen state (-24°C) and heating for 60-80 seconds at 900W (depending on the heat capacity of the product). The core temperature of the products after microwave heating exceeds 60 °C.

### Example 1

A frozen breaded food product (Product 1) obtainable by the process of the present invention was prepared using the procedure described above and using 20 gram portions of the filling composition. A frozen breaded food product not according to the invention (Product A) was prepared by coating 20 gram portions of frozen filling composition with the adhesion composition, followed by the application of a fine crumb, coating with the adhesion composition and application of the same coarse crumb as was used in the preparation of Product 1. The fine crumb was produced as described in WO 2010/001101, followed by milling and sieving to a particles size of less than 0.8 to 1.5 mm.

Both Product 1 and Product A were fried at 180°C for 2 minutes and frozen at -90°C for 12 minutes. Next the products were stored at +4°C to accelerate the moisture transfer.

Crumb moisture content was measured over time. The results are shown in Table 4.

**Table 4**

| **Storage time (days)** | **Moisture content crumb (wt.%)** | |
|---|---|---|
| | **Product 1** | **Product A** |
| 2 | 7.0 | 13.3 |
| 3 | 12.9 | 22.5 |
| 4 | 16.5 | 20.7 |
| 5 | 19.0 | 25.1 |

This data shows that the dough layer acts as a moisture barrier, preventing migration from the filling to the crumb.

### Example 2

Frozen breaded food products prepared according to the present invention were prepared using the procedure described above, using 8 gram portions of the filling composition, a frying time of 2.5 minutes and two different doughs, one dough having a fat content of appr. 15 wt.% and the other dough having a fat content of appr. 25 wt.%. The compositions of these two doughs are shown in Table 5.

**Table 5**

| | **Wt.%** | |
|---|---|---|
| | 1 | 2 |
| Wheat flour | 50.92 | 56.14 |
| Salt | 1.02 | 1.16 |
| Fat powder ¹ | 25.15 | 14.53 |
| Water | 22.91 | 26.16 |

| | | |
|---|---|---|
| ¹ melting point: 58°C | | |

The two frozen breaded food products were prepared for consumption in a microwave after 4, 8, 12, 16 and 20 weeks storage at -24 °C. The ready-to-eat products were evaluated by a trained panel that scored crispiness and toughness of the products. Both attributes were scored on a scale of 1-5 as shown in Table 6.

**Table 6**

| | **Crispiness** | **Toughness** |
|---|---|---|
| 1 | No crunch at all | No toughness at all |
| 2 | Low crunch | Slightly tough |
| 3 | Good crunch | Tough |
| 4 | Very good curnch | Very tough |
| 5 | As fresh fried | Extremely tough |

The results of the panel evaluation are shown in Table 7

**Table 7**

| **Storage time (weeks)** | **Product 1 (25% fat)** | | **Product 2 (15% fat)** | |
|---|---|---|---|---|
| | **crispiness** | **toughness** | **crispiness** | **toughness** |
| 4 | 3 | 1 | 3 | 2 |
| 9 | 3 | 1 | 2+ | 1 |
| 12 | 2 | 1 | 2 | 1.5 |
| 16 | 2.5 | 1 | 2 | 1 |
| 20 | 2 | 1.5 | 1+ | 1.5 |

### Example 3

Frozen breaded food products prepared according to the present invention were prepared using the procedure described above, using 8 gram portions of the filling composition, a frying time of 2.5 minutes and four different doughs having a fat content of 20% to 35%.

The compositions of these two doughs are shown in Table 8.

**Table 8**

| | **Wt.%** | | | |
|---|---|---|---|---|
| | **1** | **2** | **3** | **4** |
| Wheat flour | 54.08 | 50.68 | 47.33 | 43.96 |
| Salt | 1.08 | 1.01 | 0.95 | 0.88 |
| Yeast | 0.27 | 0.25 | 0.24 | 0.22 |
| Emulsifier ¹ | 0.22 | 0.20 | 0.19 | 0.18 |
| Fat powder ² | 20.01 | 25.05 | 30.00 | 34.99 |
| Water | 24.34 | 22.81 | 21.30 | 19.78 |

| | | | | |
|---|---|---|---|---|
| ¹ Lametop 300 ² Palm stearin, melting point: appr. 53°C | | | | |

The four frozen breaded food products were prepared for consumption in a microwave after 4, 8, 12 and 16 weeks storage at -24 °C. The ready-to-eat products were evaluated by a trained panel. The product made with a dough having a fat content of 25 wt.% was found to be superior to the other three products in that the ready-to-eat product was more crispy after prolonged frozen storage.

### Example 4

Frozen breaded food products prepared according to the present invention were prepared using the procedure described above, using 8 gram portions of the filling composition, a frying time of 2.5 minutes and 4 different doughs. The doughs differed from each other in that 4 different fats were used in their preparation. Details about these 4 different fats are shown in Table 9.

**Table 9**

| | **Type of fat** | **Melting point (in °C)** |
|---|---|---|
| 1 | Hydrogenated blend of rapeseed oil and coconut oil | 46 |
| 2 | Palm stearin | 53 |
| 3 | Hydrogenated blend of sunflower 70%, rapeseed 20%, coconut 10% | 58 |
| 4 | Hydrogenated rapeseed oil | 70 |

The four frozen breaded food products were prepared for consumption in a microwave after 4, 8, 12, 16 and 20 weeks storage at -24 °C. The ready-to-eat products were evaluated by a trained panel in the same way as in Example 2 (C=crispiness; T=toughness). The results are shown in Table 10.

**Table 10**

| **Storage time (weeks)** | **1** | | **2** | | **3** | | **4** | |
|---|---|---|---|---|---|---|---|---|
| | **C** | **T** | **C** | **T** | **C** | **T** | **C** | **T** |
| 4 | 3 | 1.5 | 3 | 1.5 | 3 | 1 | 3 | 3 |
| 8 | 3 | 1 | 2 | 1.5 | 3 | 1 | 3.5 | 1.5 |
| 12 | 1.5 | 1 | 2 | 1.5 | 2 | 1 | 1.5 | 2 |
| 16 | 2.5 | 1.5 | 2 | 1.5 | 2.5 | 1 | 1.25 | 2.5 |
| 20 | 1.5 | 1.5 | 1.25 | 1.5 | 2 | 1.5 | 1.25 | 2.5 |

The product containing fat 4 was found to leave a waxy feeling in the mouth.

## Claims

1. A process of manufacturing a microwaveable frozen breaded food product, said method comprising:
a) providing a filling composition with a water content of at least 40 wt.%;
b) providing a plastically deformable farinaceous dough comprising 40-70 wt.% flour, 10-40 wt.% fat and 12-40 wt.% water;
c) enveloping a portion of the filling composition with a layer of the farinaceous dough to produce an enveloped filling, the portion having a weight of 5 to 90 grams and the layer of dough having an average thickness of 0.5-2 mm;
d) pre-coating the surface of the enveloped filling with an adhesion composition to produce a pre-coated product;
e) applying a crumb onto the surface of the pre-coated product to produce a breaded product;
f) frying the breaded product to produce a fried product; and
g) freezing the fried product to a core temperature of less than -12 °C.

2. Process according to claim 1, wherein the filling composition has a water content in the range of 50 to 90 wt.%

3. Process according to claim 1 or 2, wherein the dough comprises 15 to 35 wt.% fat.

4. Process according to any preceding claim, wherein the fat contained in the dough has a melting point of at least 40°C.

5. Process according to any preceding claim, wherein the layer of dough has an average thickness of 0.75-1.5 mm.

6. Process according to any preceding claim, wherein the filling composition has a water content of at least 60 wt.%.

7. Process according to any preceding claim, wherein the filling composition contains at least 4% by weight of water of gelatin and/or polysaccharide selected from starch, modified starch, carboxymethylcellulose, methylcellulose, hydroxymethylcellulose, hydroxypropylmethyl cellulose, microcrystalline cellulose, pectin, alginate, gum Arabic, gellan, carrageenan, galactomannan, xanthan gum and combinations thereof.

8. Process according to claim 7, wherein the filling composition contains at least 4% by weight of water of starch, modified starch or a combination thereof.

9. Process according to any preceding claim, wherein the filling composition contains glycerol and water in a weight ratio that lies in the range of 1:9 to 2:1.

10. Process according to any preceding claim, wherein the adhesion composition is an aqueous fluid comprising 0.3-10 wt.% of hydrocolloid selected from polysaccharide, protein and combinations thereof.

11. Process according to any preceding claim, wherein the crumb has a moisture content of less than 10 wt.% and comprises at least 80 wt.% particles of cooked dough having a diameter in the range of 0.5-3 mm.

12. Process according to any preceding claim, wherein the fried product is frozen by means of cryogenic freezing.

## Patentansprüche

1. Verfahren zur Herstellung eines mikrowellengeeigneten, gefrorenen, panierten Nahrungsmittelprodukts, wobei das Verfahren umfasst:
a) Bereitstellen einer Füllungszusammensetzung mit einem Wassergehalt von mindestens 40 Gew.-%;
b) Bereitstellen eines plastisch verformbaren Mehlteigs, der 40-70 Gew.-% Mehl, 10-40 Gew.-% Fett und 12-40 Gew.-% Wasser enthält;
c) Umhüllen einer Portion der Füllungszusammensetzung mit einer Schicht des mehligen Teigs, um eine umhüllte Füllung herzustellen, wobei die Portion ein Gewicht von 5 bis 90 Gramm hat und die Teigschicht eine durchschnittliche Dicke von 0,5 bis 2 mm aufweist;
d) Vorbeschichten der Oberfläche der umhüllten Füllung mit einer Haftmittelzusammensetzung, um ein vorbeschichtetes Produkt herzustellen;
e) Aufbringen von Bröseln auf die Oberfläche des vorbeschichteten Produkts, um ein paniertes Produkt herzustellen;
f) Frittieren des panierten Produkts, um ein frittiertes Produkt herzustellen; und
g) Einfrieren des frittierten Produkts auf eine Kerntemperatur von weniger als -12 °C.

2. Verfahren nach Anspruch 1, wobei die Füllungszusammensetzung einen Wassergehalt im Bereich von 50 bis 90 Gew.-% aufweist.

3. Verfahren nach Anspruch 1 oder 2, wobei der Teig 15 bis 35 Gew.-% Fett enthält.

4. Verfahren nach einem der vorhergehenden Ansprüche, wobei das in dem Teig enthaltene Fett einen Schmelzpunkt von mindestens 40°C aufweist.

5. Verfahren nach einem der vorhergehenden Ansprüche, wobei die Teigschicht eine durchschnittliche Dicke von 0,75-1,5 mm aufweist.

6. Verfahren nach einem der vorangehenden Ansprüche, wobei die Füllungszusammensetzung einen Wassergehalt von mindestens 60 Gew.-% aufweist.

7. Verfahren nach einem der vorhergehenden Ansprüche, wobei die Füllungszusammensetzung, berechnet auf Wasser, mindestens 4 Gew.-% Gelatine und/oder Polysaccharid, ausgewählt aus Stärke, modifizierter Stärke, Carboxymethylcellulose, Methylcellulose, Hydroxymethylcellulose, Hydroxypropylmethylcellulose, mikrokristalliner Cellulose, Pektin, Alginat, Gummi arabicum, Gellan, Carrageenan, Galactomannan, Xanthangummi und Kombinationen davon, enthält.

8. Verfahren nach Anspruch 7, wobei die Füllungszusammensetzung, berechnet auf Wasser, mindestens 4 Gew.-% Stärke, modifizierter Stärke oder einer Kombination davon enthält.

9. Verfahren nach einem der vorhergehenden Ansprüche, wobei die Füllungszusammensetzung Glycerin und Wasser in einem Gewichtsverhältnis enthält, das im Bereich von 1:9 bis 2:1 liegt.

10. Verfahren nach einem der vorhergehenden Ansprüche, wobei die Haftmittelzusammensetzung eine wässrige Flüssigkeit ist, die 0,3-10 Gew.-% eines Hydrokolloids enthält, das aus Polysaccharid, Protein und Kombinationen davon ausgewählt ist.

11. Verfahren nach einem der vorhergehenden Ansprüche, wobei die Brösel einen Feuchtigkeitsgehalt von weniger als 10 Gew.-% aufweisen und mindestens 80 Gew.-% Teilchen aus gekochtem Teig mit einem Durchmesser im Bereich von 0,5 bis 3 mm umfassen.

12. Verfahren nach einem der vorhergehenden Ansprüche, wobei das frittierte Produkt durch kryogenes Einfrieren gefroren wird.

## Revendications

1. Procédé de fabrication d'un produit alimentaire pané congelé adapté au four micro-ondes, ledit procédé comprenant les étapes consistant à :
a) fournir une composition de garniture ayant une teneur en eau d'au moins 40 % en poids ;
b) fournir une pâte farineuse déformable plastiquement comprenant 40 à 70 % en poids de farine, 10 à 40 % en poids de matières grasses et 12 à 40 % en poids d'eau ;
c) envelopper une partie de la composition de garniture avec une couche de pâte farineuse pour produire une garniture enveloppée, la portion ayant un poids de 5 à 90 grammes et la couche de pâte ayant une épaisseur moyenne de 0,5 à 2 mm ;
d) pré-enduire la surface de la garniture enveloppée à l'aide d'une composition d'adhérence pour produire un produit préenduit ;
e) appliquer une chapelure sur la surface du produit préenduit pour produire un produit pané ;
f) faire frire le produit pané pour produire un produit frit ; et
g) congeler le produit frit jusqu'à une température à cœur inférieure à - 12°C.

2. Procédé selon la revendication 1, dans lequel la composition de garniture a une teneur en eau dans la plage de 50 à 90 % en poids.

3. Procédé selon la revendication 1 ou 2, dans lequel la pâte comprend 15 à 35 % en poids de matières grasses.

4. Procédé selon une quelconque revendication précédente, dans lequel les matières grasses contenues dans la pâte présentent un point de fusion d'au moins 40°C.

5. Procédé selon une quelconque revendication précédente, dans lequel la couche de pâte a une épaisseur moyenne de 0,75 à 1,5 mm.

6. Procédé selon une quelconque revendication précédente, dans lequel la composition de garniture a une teneur en eau d'au moins 60 % en poids.

7. Procédé selon une quelconque revendication précédente, dans lequel la composition de garniture contient au moins 4 % en poids d'eau de gélatine et/ou de polysaccharide choisis parmi de l'amidon, amidon modifié, carboxyméthylcellulose, méthylcellulose, hydroxyméthylcellulose, hydroxypropylméthylcellulose, cellulose microcristalline, pectine, alginate, gomme arabique, gellan, carraghénane, galactomannane, gomme de xanthane et des combinaisons de ceux-ci.

8. Procédé selon la revendication 7, dans lequel la composition de garniture contient au moins 4 % en poids d'eau d'amidon, d'amidon modifié ou d'une combinaison de ceux-ci.

9. Procédé selon une quelconque revendication précédente, dans lequel la composition de garniture contient du glycérol et de l'eau selon un rapport en poids dans la plage de 1:9 à 2:1.

10. Procédé selon une quelconque revendication précédente, dans lequel la composition d'adhérence est un fluide aqueux comprenant 0,3 à 10 % en poids d'hydrocolloïde choisi parmi un polysaccharide, une protéine et des combinaisons de ceux-ci.

11. Procédé selon une quelconque revendication précédente, dans lequel la chapelure a une teneur en humidité inférieure à 10 % en poids et comprend au moins 80 % en poids de particules de pâte cuite ayant un diamètre dans la plage de 0,5 et 3 mm.

12. Procédé selon une quelconque revendication précédente, dans lequel le produit frit est congelé par l'intermédiaire d'une congélation cryogénique.
